# FASCICULE DE BREVET EUROPEEN

(11) **EP 1 828 302 B1**
(45) Date de publication et mention de la délivrance du brevet: **10.10.2012**
(21) Numéro de dépôt: 05807253.9
(22) Date de dépôt: 28.10.2005
(51) Int. Cl.: C08L 21/00, B60C 1/00

(54) **SYSTEME PLASTIFIANT POUR COMPOSITION DE CAOUTCHOUC**
WEICHMACHERSYSTEM FÜR EINE KAUTSCHUKZUSAMMENSETZUNG
PLASTICISER SYSTEM FOR A RUBBER COMPOSITION

(30) Priorité: 28.10.2004 FR 0411499
(43) Date de publication de la demande: 05.09.2007
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: ROBERT, Pierre, F-63000 Clermont-Ferrand (FR); DE LANDTSHEER, Stéphanie, F-63100 Clermont-Ferrand (FR); FAVROT, Jean-Michel, F-63800 Cournon d'Auvergne (FR); LOPITAUX, Garance, F-03300 Bellenaves (FR)
(74) Mandataire: Ribière, Joel
(86) Numéro de dépôt international: PCT/EP2005/011564
(87) Numéro de publication internationale: WO 2006/061064

(56) Documents cités:
- EP-A- 0 775 719
- DATABASE CA [Online] CHEMICAL ABSTRACTS SERVICE, COLUMBUS, OHIO, US; NULL, V.: "Safe process oils for tires with low environmental impact" XP002184259 extrait de STN Database accession no. 2000:16340 cité dans la demande & KAUTSCHUK GUMMI KUNSTSTOFFE , 52(12), 799-800,802-805 CODEN: KGUKAC; ISSN: 0022-9520, 1999,
- DATABASE CA [Online] CHEMICAL ABSTRACTS SERVICE, COLUMBUS, OHIO, US; BOWMAN, J. ET AL: "The influence of non - toxic extender oil on SBR performances" XP001183198 extrait de STN Database accession no. 2004:497461 & KGK, KAUTSCHUK GUMMI KUNSTSTOFFE , 57(1-2), 31-36 CODEN: KKGKB5; ISSN: 0948-3276, 2004,

## Description

La présente invention se rapporte aux compositions de caoutchouc destinées notamment à la fabrication de pneumatiques ou de produits semi-finis pour pneumatiques, elle est plus particulièrement relative aux systèmes plastifiants utilisables pour la plastification de telles compositions.

Les compositions de caoutchouc pour pneumatiques comportent de manière connue des agents plastifiants utilisés pour la préparation ou synthèse de certains élastomères diéniques, pour améliorer la mise en oeuvre (ou "processabilité") desdites compositions à l'état cru ainsi que certaines de leurs propriétés d'usage à l'état cuit comme par exemple, dans le cas de bandes de roulement de pneumatiques, leur adhérence sur sol mouillé ou encore leur résistance à l'abrasion et aux coupures.

Depuis fort longtemps, ce sont essentiellement des huiles dérivées du pétrole et fortement aromatiques, connues sous le nom d'huiles DAE (pour *"Distillate Aromatic Extracts*"), qui ont été utilisées pour remplir cette fonction d'agent plastifiant. Nombre de manufacturiers de pneumatiques, pour des raisons environnementales, envisagent aujourd'hui de remplacer progressivement ces huiles DAE par des huiles de substitution du type "non-aromatiques", en particulier par des huiles dites MES (pour *"Medium Extracted Solvates"*) ou TDAE (*"Treated Distillate Aromatic Extracts"*) se caractérisant par un très faible taux de polyaromatiques (environ 20 à 50 fois moins).

Les Demanderesses ont constaté que le remplacement, dans des compositions de caoutchouc pour pneumatique, des huiles aromatiques DAE par ces huiles MES ou TDAE se traduisait de manière inattendue par une diminution de la résistance à l'abrasion et aux coupures desdites compositions, cette diminution pouvant être même rédhibitoire pour certaines applications, notamment vis-à-vis du problème d'écaillement des bandes de roulement de pneumatiques.

L' « écaillement » (en anglais *"chipping"* ou *"scaling"*) est un mécanisme d'endommagement connu qui correspond à des arrachements lamellaires superficiels - en forme d'écailles - de la "gomme" (ou composition de caoutchouc) constitutive des bandes de roulement, sous certaines conditions de roulage agressives. Ce problème est notamment rencontré sur des pneumatiques pour véhicule hors-la-route ou de type chantier ou génie civil, ayant à rouler sur différents types de sols, pour certains caillouteux et relativement agressifs ; il a été par exemple décrit, ainsi que certaines solutions pour y remédier, dans les documents de brevet EP-A-0 030 579, FR-A-2 080 661 (ou GB-A-1 343 487), ou encore dans les brevets US-A-3 927 144 et US-A-4 968 764 préconisant pour y remédier l'emploi de résines hydrocarbonées à base de cyclopentadiène.

Poursuivant leurs recherches, les Demanderesses ont découvert que le remplacement d'une partie de ces huiles MES ou TDAE par un autre agent plastifiant spécifique permettait non seulement de résoudre le problème ci-dessus, mais, ce qui est encore plus surprenant, d'améliorer encore la résistance à l'abrasion et aux coupures des compositions de caoutchouc utilisant des huiles conventionnelles aromatiques à titre d'agent plastifiant.

En conséquence, un premier objet de l'invention concerne une composition de caoutchouc à base d'au moins un élastomère diénique, une charge renforçante, un système plastifiant et un système de réticulation, caractérisée en ce que ledit système plastifiant comporte (pce = parties en poids pour cent parties d'élastomère) :
- entre 5 et 35 pce d'une huile MES ou TDAE ;
- entre 5 et 35 pce d'une résine de copolymère coupe C₅/ vinylaromatique comportant 0 à moins de 10% en poids de (di)cyclopentadiène.

L'invention a également pour objet un procédé pour préparer une composition de caoutchouc ayant une résistance à l'abrasion et aux coupures améliorée, cette composition étant à base d'un élastomère diénique, d'une charge renforçante, d'un système plastifiant et d'un système de réticulation, ledit procédé comportant les étapes suivantes :
- incorporer à un élastomère diénique, au cours d'une première étape dite "non-productive", au moins une charge renforçante et un système plastifiant, en malaxant thermomécaniquement le tout, en une ou plusieurs fois, jusqu'à atteindre une température maximale comprise entre 110°C et 190°C ;
- refroidir l'ensemble à une température inférieure à 100°C ;
- incorporer ensuite, au cours d'une seconde étape dite "productive", le système de réticulation ;
- malaxer le tout jusqu'à une température maximale inférieure à 110°C,
et étant caractérisé en ce que ledit système plastifiant comporte :
- entre 5 et 35 pce d'une huile MES ou TDAE ;
- entre 5 et 35 pce d'une résine de copolymère coupe C₅/ vinylaromatique comportant 0 à moins de 10% en poids de (di)cyclopentadiène.

L'invention concerne également, en soi, un système plastifiant utilisable pour la plastification d'une composition de caoutchouc diénique, ledit système comportant en combinaison une huile MES ou TDAE et une résine de copolymère coupe C₅/ vinylaromatique comportant 0 à moins de 10% en poids de (di)cyclopentadiène ainsi que l'utilisation d'un tel système pour la plastification d'une composition de caoutchouc diénique.

L'utilisation d'une résine de copolymère coupe C₅/ vinylaromatique comportant une fraction pondérale de cyclopentadiène et/ou dicyclopentadiène inférieure à 10%, s'est révélée favorable au compromis hystérèse à basse température/ hystérèse à haute température, que l'homme du métier du pneumatique associe de manière connue au compromis adhérence sur sol mouillé et résistance au roulement.

L'invention a également pour objet l'utilisation d'une composition selon l'invention pour la fabrication d'un article fini ou d'un produit semi-fini en caoutchouc destiné à tout système de liaison au sol de véhicule automobile, tel que pneumatique, appui interne de sécurité pour pneumatique, roue, ressort en caoutchouc, articulation élastomérique, autres élément de suspension et anti-vibratoire.

L'invention a particulièrement pour objet l'utilisation d'une composition selon l'invention pour la fabrication de pneumatiques ou de produits semi-finis en caoutchouc destinés à ces pneumatiques, ces produits semi-finis étant de préférence choisis dans le groupe constitué par les bandes de roulement, les nappes d'armature de sommet, les flancs, les nappes d'armature de carcasse, les bourrelets, les protecteurs, les sous-couches, les blocs de caoutchouc et autres gommes internes, notamment les gommes de découplage, destinés à assurer la liaison ou l'interface entre les zones précitées des pneumatiques.

L'invention a plus particulièrement pour objet l'utilisation d'une composition selon l'invention pour la fabrication d'une bande de roulement de pneumatique présentant notamment une résistance aux coupures et à l'écaillement améliorée.

L'invention a également pour objet les articles finis et produits semi-finis en caoutchouc eux-mêmes, en particulier les pneumatiques et produits semi-finis pour pneumatiques, lorsqu'ils comportent une composition élastomérique conforme à l'invention. Les pneumatiques conformes à l'invention sont notamment destinés à des véhicules tourisme comme à des véhicules deux roues (moto, vélo), véhicules industriels choisis parmi camionnettes, "Poids-lourd" - i.e., métro, bus, engins de transport routier (camions, tracteurs, remorques), véhicules hors-la-route - , engins agricoles ou de génie civil, avions, autres véhicules de transport ou de manutention.

L'invention ainsi que ses avantages seront aisément compris à la lumière de la description détaillée et des exemples de réalisation qui suivent.

### I. - MESURES ET TESTS

Les compositions de caoutchouc sont caractérisées, après cuisson, comme indiqué ci-après.

### I-1. Dureté Shore A

La dureté Shore A des compositions après cuisson est appréciée conformément à la norme ASTM D 2240-86.

### I-2. Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation) les modules sécants nominaux (ou contraintes apparentes, en MPa) à 10% d'allongement (notés M10), 100% d'allongement (M100) et 300% d'allongement (M300).

### I-3. Propriétés dynamiques

Les propriétés dynamiques ΔG* et tan(δ)ₘₐₓ sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 315 mm² de section), soumis à une sollicitation sinusoïdale en cisaillement simple alterné, à la fréquence de 10Hz, lors d'un balayage en température de -80°C à +100°C, sous une contrainte fixe de 0,34 MPa : on enregistre la valeur maximale de tan δ observée (soit tan(8)ₘₐₓ "en température"). On soumet également l'échantillon de composition, à la température de 23°C, à un balayage en amplitude de déformation de 0, 1 % à 50% (cycle aller), puis de 50% à 0, 1 % (cycle retour) : le résultat exploité est le module complexe de cisaillement dynamique (G*), on indique pour le cycle retour l'écart de module complexe (ΔG*) entre les valeurs à 0, 1 % et à 50% de déformation (effet Payne).

### I-4. Résistance aux coupures et à l'écaillement

La résistance aux coupures et à l'écaillement des compositions de caoutchouc est évaluée à travers un test de roulage de pneumatiques dont les bandes de roulement sont constituées desdites compositions.

Le test est conduit à vitesse de roulage modérée (inférieure à 60 km/h), sur deux circuits successifs :
- un premier roulage sur un circuit en terre battue caillouteux (cailloux à grosse granulométrie), destiné à fragiliser la bande de roulement, sous forme de coupures et autres agressions superficielles des pains de gomme constitutifs de sa sculpture ;
- un second roulage sur un circuit goudronné fortement virageux, destiné à "révéler" l'écaillement, suite à l'arrachement de morceaux de caoutchouc (en forme d'écailles), selon les plans fragilisés.

A la sortie du test de roulage, l'état des bandes de roulement est évalué d'une part visuellement (photographies) par l'attribution d'une note (selon une échelle de gravité de 1 à 10), d'autre part par le mesurage de la perte de poids. La résistance à l'écaillement est finalement appréciée par un note globale relative (base 100 sur un produit de référence).

### II. - DESCRIPTION DETAILLEE DE L'INVENTION

La composition de caoutchouc selon l'invention, utilisable notamment pour la fabrication d'un pneumatique ou d'une bande de roulement de pneumatique, est à base d'au moins un élastomère diénique, une charge renforçante, un système de réticulation et un système plastifiant spécifique.

Par l'expression composition "à base de", il faut entendre une composition comportant le mélange et/ou le produit de réaction des différents constituants utilisés, certains de ces constituants de base étant susceptibles de, ou destinés à réagir entre eux, au moins en partie, lors des différentes phases de fabrication de la composition, en particulier au cours de sa réticulation ou vulcanisation.

Dans la présente description, sauf indication expresse différente, tous les pourcentages (%) indiqués sont des % en masse.

### II-1. Elastomère diénique

Par élastomère ou caoutchouc "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbomène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1 % et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

Conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65%, une teneur en liaisons trans-1,4 comprise entre 20% et 80%, les copolymères de butadiène-isoprène et notamment ceux ayant une teneur en isoprène comprise entre 5% et 90% en poids et une température de transition vitreuse (Tg, mesurée selon ASTM D3418) de -40°C à -80°C, les copolymères isoprène-styrène et notamment ceux ayant une teneur en styrène comprise entre 5% et 50% en poids et une Tg comprise entre -25°C et -50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

En résumé, l'élastomère diénique de la composition conforme à l'invention est choisi préférentiellement dans le groupe des élastomères diéniques fortement insaturés constitué par les polybutadiènes (en abrégé "BR"), les polyisoprènes (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Selon un mode de réalisation particulier, l'élastomère diénique est majoritairement (c'est-à-dire pour plus de 50 pce) un SBR, qu'il s'agisse d'un SBR préparé en émulsion ("E-SBR") ou d'un SBR préparé en solution ("S-SBR"), ou un coupage (mélange) SBR/BR, SBR/NR (ou SBR/IR), ou encore BR/NR (ou BR/IR). Dans le cas d'un élastomère SBR, on utilise notamment un SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C ; un tel SBR peut être avantageusement utilisé en mélange avec un BR possédant de préférence plus de 90% de liaisons cis-1,4.

Selon un autre mode de réalisation particulier, l'élastomère diénique est majoritairement (pour plus de 50 pce) un élastomère isoprénique. C'est le cas en particulier lorsque les compositions de l'invention sont destinées à constituer, dans les pneumatiques, les matrices de caoutchouc de certaines bandes de roulement (par exemple pour véhicules industriels), de nappes d'armature de sommet (par exemple de nappes de travail, nappes de protection ou nappes de frettage), de nappes d'armature de carcasse, de flancs, de bourrelets, de protecteurs, de sous-couches, de blocs de caoutchouc et autres gommes internes assurant l'interface entre les zones précitées des pneumatiques.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode de réalisation particulier, notamment lorsqu'elle est destinée à un flanc de pneumatique, à une gomme intérieure étanche de pneumatique sans chambre (ou autre élément imperméable à l'air), la composition conforme à l'invention peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

Selon un autre mode préférentiel de réalisation de l'invention, la composition de caoutchouc comprend un coupage d'un (un ou plusieurs) élastomère diénique dit "à haute Tg" présentant une Tg comprise entre -65°C et -10°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse, (présentant un taux d'enchaînements cis-1,4 de préférence supérieur à 95%), les BIR, les SIR, les SBIR, et les mélanges de ces élastomères. L'élastomère à basse Tg comprend de préférence des unités butadiène selon un taux au moins égal à 70% ; il consiste de préférence en un polybutadiène (BR) présentant un taux d'enchaînements cis-1,4 supérieur à 90 %.

Selon un mode particulier de réalisation de l'invention, la composition de caoutchouc comprend par exemple de 40 à 100 pce, en particulier de 50 à 100 pce, d'un élastomère à haute Tg en coupage avec 0 à 60 pce, en particulier de 0 à 50 pce, d'un élastomère à basse Tg, par exemple 100 pce d'un ou plusieurs copolymères de styrène et de butadiène préparés en solution.

Selon un autre mode particulier de réalisation de l'invention, l'élastomère diénique de la composition selon l'invention comprend un coupage d'un BR (à titre d'élastomère basse Tg) présentant un taux d'enchaînements cis-1,4 supérieur à 90%, avec un S-SBR ou un E-SBR (à titre d'élastomère haute Tg).

Les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### II-2. Charge renforçante

On peut utiliser tout type de charge renforçante connue pour ses capacités à renforcer une composition de caoutchouc utilisable pour la fabrication de pneumatiques, par exemple une charge organique tel que du noir de carbone, ou encore une charge inorganique renforçante telle que de la silice à laquelle est associé un agent de couplage.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772).

Par "charge inorganique renforçante", doit être entendu dans la présente demande, par définition, toute charge inorganique ou minérale, quelles que soient sa couleur et son origine (naturelle ou de synthèse), encore appelée charge "blanche", charge "claire" voire "charge non noire" ("*non-black filler*") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂) ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HD"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16387 (ou US2005/0004297). Comme exemples d'alumines renforçantes, on peut citer les alumines "Baikalox" "A125" ou "CR125" de la société Baïkowski, "APA-100RDX" de Condea, "Aluminoxid C" de Degussa ou "AKP-G015" de Sumitomo Chemicals.

A titre d'autres exemples de charge inorganique susceptible d'être utilisée peuvent être encore cités des (oxyde-)hydroxydes d'aluminium, des oxydes de titane ou des carbures de silicium renforçants (voir par exemple demande WO 02/053634 ou US2004/0030017).

Lorsque les compositions de l'invention sont destinées à des bandes de roulement de pneumatique à faible résistance au roulement, la charge inorganique renforçante utilisée, en particulier s'il s'agit de silice, a de préférence une surface BET comprise entre 45 et 400 m²/g, plus préférentiellement comprise entre 60 et 300 m²/g.

De manière préférentielle, le taux de charge renforçante totale (noir de carbone et/ou charge inorganique renforçante) est compris entre 20 et 200 pce, plus préférentiellement entre 30 et 150 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US2005/0016651)et WO03/002649 (ou US2005/0016650).

Conviennent en particulier, sans que la définition ci-après soit limitative, des silanes polysulfurés dits "symétriques" répondant à la formule générale (I) suivante:

(I) Z - A - Sₙ - A - Z ,

dans laquelle:
- n est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 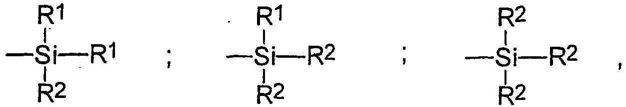 dans lesquelles:
- les radicaux R¹, substitués ou non substitués, identiques ou différents entre eux, représentent un groupe alkyle en C₁-C₁₈, cycloallcyle en C₅-C₁₈ ou aryle en C₆-C₁₈ (de préférence des groupes alkyle en C₁-C₆, cyclohexyle ou phényle, notamment des groupes alkyle en C₁-C₄-, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "n" est un nombre fractionnaire de préférence compris entre 2 et 5, plus préférentiellement proche de 4. Mais l'invention peut être aussi avantageusement mise en oeuvre par exemple avec des alkoxysilanes disulfurés (n = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)alkyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoallcoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US200410132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule I ci-dessus) tels que décrits dans les demandes de brevet WO 02/30939 (ou brevet US 6 774 255) et WO 02/31041 (ou US2004/0051210).

Dans les compositions de caoutchouc conformes à l'invention, la teneur en agent de couplage est préférentiellement comprise entre 4 et 12 pce, plus préférentiellement entre 3 et 8 pce.

L'agent de coupage pourrait être préalablement greffé sur l'élastomère diénique ou sur la charge inorganique renforçante. On préfère toutefois, notamment pour des raisons de meilleure mise en oeuvre des compositions à l'état cru, utiliser l'agent de couplage soit greffé sur la charge inorganique renforçante, soit à l'état libre (i.e., non greffé).

### II-3. Système plastifiant

Les compositions de caoutchouc de l'invention ont pour caractéristique essentielle d'utiliser un système plastifiant comportant au moins :
- entre 5 et 35 pce d'une huile MES ou TDAE ;
- entre 5 et 35 pce d'une résine de copolymère coupe C₅/ vinylaromatique

Les huiles MES et TDAE sont bien connues de l'homme du métier, on se reportera par exemple à la publication récente KGK (Kautschuk Gummi Kunstoffe) 52. Jahrgang, Nr.12/99, pp. 799-805, intitulée "Safe Process Oils for Tires with Low Environmental Impact*".* Des demandes de brevet décrivant l'emploi de telles huiles, en substitution d'huiles aromatiques conventionnelles, sont par exemple EP-A-1 179 560 (ou US2002/0045697) ou EP-A-1 270 657.

A titre d'exemples d'huiles MES (qu'elles soient du type "extraites" ou "hydrotraitées") ou d'huiles TDAE, on peut citer par exemple les produits commercialisés sous les dénominations "Flexon 683" de ExxonMobil, "Vivatec 200" ou "Vivatec 500" de H&R European, "Plaxolene MS" de Total, ou encore "Catenex SNR" de Shell.

Les résines (on rappelle que l'appellation "résine" est réservée par définition à un composé solide) de copolymère de coupe C₅/ vinylaromatique, en particulier de coupe C₅/ styrène ou coupe C₅/ coupe C₉, sont bien connues ; elles ont été essentiellement utilisées jusqu'ici pour leur application comme agents tackifiants pour les adhésifs et peintures, mais aussi comme agents de mise en oeuvre (*"processing aids"*) dans des compositions de caoutchouc pour pneumatiques.

Le copolymère coupe C₅/ vinylaromatique est, par définition et de manière connue, un copolymère d'un monomère vinylaromatique et d'une coupe C₅.

A titre de monomère vinylaromatique conviennent par exemple le styrène, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C₉ (ou plus généralement d'une coupe C₈ à C₁₀). De préférence, le composé vinyle-aromatique est du styrène ou un monomère vinylaromatique issu d'une coupe C₉ (ou plus généralement d'une coupe C₈ à C₁₀).

De manière connue, on entend par coupe C₅ (ou par exemple respectivement C₉) toute fraction issue d'un procédé issu de la pétrochimie ou du raffinage des pétroles, toute coupe de distillation contenant majoritairement des composés ayant 5 (ou respectivement 9 dans la cas d'une coupe C₉) atomes de carbone ; les coupes C₅ par exemple peuvent contenir à titre illustratif et non limitatif les composés suivants dont les proportions relatives peuvent varier en fonction du procédé d'obtention, par exemple de l'origine du naphta et du procédé de vapocraquage : 1,3-butadiène, butène-1, 2-butènes, 1,2-butadiène, 3-méthyl-1-butène, 1,4-pentadiène, 1-pentène, 2-méthyl-1-butène, 2-pentènes, isoprène, cyclopentadiène qui peut être présent sous la forme de son dimère le dicyclopentadiène, pipérylènes, cyclopentène, 1-méthyl-cyclopentène, 1-hexène, méthylcyclopentadiène, cyclohexène. Ces coupes peuvent être obtenues par tous les procédés chimiques connus dans l'industrie des pétroles et de la pétrochimie. A titre d'exemples non limitatifs, on peut citer les procédés de vapocraquage du naphta ou encore les procédés de craquage catalytique sur lit fluide (*"fluid catalytic cracking"*) des essences, ces procédés pouvant être associés à tous les traitements chimiques possibles de transformation de ces coupes, connus de l'homme du métier, comme l'hydrogénation et la déshydrogénation.

De préférence, dans ledit copolymère coupe C₅/ vinylaromatique (notamment coupe C₅/styrène ou coupe C₅/coupe C₉), le composé vinylaromatique (notamment styrène ou coupe C₉) est le monomère minoritaire, exprimé en fraction molaire. Ainsi, plus préférentiellement, le pourcentage de protons aromatiques (sur le nombre total de protons du copolymère), déterminé de manière connue par analyse RMN, est inférieur à 50%, plus préférentiellement compris entre 1% et 25% (% molaires).

Le taux de résine de copolymère de coupe C₅/ vinylaromatique doit être compris entre 5 et 35 pce. En dessous du minimum indiqué, l'effet technique visé est insuffisant alors qu'au-delà de 35 pce, le pouvoir collant des compositions à l'état cru, sur les outils de mélangeage, devient rédhibitoire du point de vue industriel. Pour cette raison, ce taux de résine est de préférence compris entre 5 et 25 pce, plus préférentiellement entre 5 et 20 pce.

Celui de l'huile MES ou TDAE est de préférence compris entre 10 et 30 pce, palus préférentiellement compris entre 10 et 25 pce, tandis que le taux de système plastifiant total de l'invention comportant l'huile MES et/ou TDAE et la résine, est compris préférentiellement entre 15 et 45 pce, plus préférentiellement entre 20 et 40 pce.

La résine de copolymère coupe C₅/ vinylaromatique, en particulier de coupe C5/styrène ou coupe C₅/coupe C₉, présente au moins une (plus préférentiellement l'ensemble) des caractéristiques préférentielles suivantes :
- une Tg égale ou supérieure à 20°C (plus particulièrement supérieure à 25°C) ;
- une masse moléculaire moyenne en nombre (Mn) comprise entre 400 et 2000 g/mol ;
- un indice de polymolécularité. (Ip) inférieur à 4,5 (rappel : Ip = Mw/Mn avec Mw masse moléculaire moyenne en poids).

Encore plus préférentiellement, cette résine présente au moins une (plus préférentiellement l'ensemble) des caractéristiques préférentielles suivantes :
- une Tg comprise entre 30°C et 80°C (plus particulièrement entre 35°C et 60°C) ;
- une masse moléculaire Mn comprise entre 600 et 1500 g/mol ;
- un indice de polymolécularité inférieur à 3,0 (en particulier inférieur à 2,5).

La température de transition vitreuse Tg est mesurée de manière connue par DSC (*Differential Scanning Calorimetry*), selon la norme ASTM D3418 (1999).

La macrostructure (Mw, Mn et Ip) du copolymère de coupe C5/ vinylaromatique est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Selon une autre variante préférentielle de l'invention, la résine de copolymère coupe C₅/vinylaromatique (en particulier de coupe, C₅/styrène ou coupe C₅/coupe C₉), est dépourvue de (di)cyclopentadiène (c'est-à-dire cyclopentadiène (CPD) ou dicyclopentadiène (DCPD) ou mélange des deux) ou tout au moins en comporte une fraction pondérale qui est inférieure à 10%. On a constaté que de telles conditions conduisaient de manière inattendue, pour les pneumatiques de l'invention, à des performances améliorées en termes de.résistance au roulement et d'adhérence sur sol mouillé.

Les résines de copolymère coupe C₅/vinylaromatique, notamment coupe C₅/ styrène ou coupe C₅/coupe C₉ (plus généralement coupe C5/ coupe C₈-C₁₀) sont disponibles commercialement, par exemple vendues par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "ECR 373".

Selon un mode préférentiel de réalisation de l'invention, notamment lorsque la composition de l'invention est destinée à une bande de roulement de pneumatique, le système plastifiant de l'invention comprend en outre entre 5 et 35 pce (plus préférentiellement entre 10 et 30 pce) d'un triester d'acide gras insaturé (C₁₂-C₂₂) de glycérol, en particulier un trioléate de glycérol (dérivé de l'acide oléique et du glycérol), présent par exemple sous forme d'une huile végétale de tournesol ou de colza. Un tel triester permet de minimiser, dans ladite bande de roulement, d'une part l'exsudation en roulage par compression du système plastifiant total et, d'autre part, la migration dudit plastifiant vers des mélanges adjacents à la bande de roulement. Ceci se traduit par un tassement et un durcissement également minimisés pour la bande de roulement et, par conséquent, par une conservation dans le temps des performances d'adhérence. Dans un tel cas, de préférence, l'acide gras (ou l'ensemble des acides gras si plusieurs sont présents) comporte de l'acide oléique selon une fraction massique au moins égale à 60%, de préférence au moins égale à 70%.

Le système plastifiant de l'invention pourrait également comporter d'autres agents plastifiants non aromatiques ou très faiblement aromatiques, par exemple des huiles naphténiques, paraffiniques, d'autres résines plastifiantes hydrocarbonées présentant une haute Tg de préférence-supérieure à 25°C, par exemple des résines d'homo ou copolymères d'alphapinène, betapinène, dipentène (ou polylimonène), coupe C₅, en combinaison avec la résine de copolymère coupe C₅/ vinylaromatique et l'huile MES ou TDAE précédemment décrits.

### II-4. Additifs divers

Les compositions de caoutchouc conformes à l'invention comportent également tout ou partie des additifs usuels habituellement utilisés dans les compositions d'élastomères destinées à la fabrication de pneumatiques, notamment de bandes de roulement, comme par exemple des pigments, des agents de protection tels que cires anti-ozone, anti-ozonants chimiques, antioxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269 (ou US2003/212185), un système de réticulation à base soit de soufre, soit de donneurs de soufre et/ou de peroxyde et/ou de bismaléimides, des accélérateurs de vulcanisation, des activateurs de vulcanisation.

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### II-5. Préparation des compositions de caoutchouc

Les compositions sont fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé conforme à l'invention pour préparer une composition de caoutchouc présentant une résistance à l'abrasion et aux coupures améliorée, comporte les étapes suivantes :
- incorporer à un élastomère diénique, au cours d'une première étape (dite "nori-productive"), au moins une charge renforçante et un système plastifiant, en malaxant thermomécaniquement le tout, en une ou plusieurs fois, jusqu'à atteindre une température maximale comprise entre 110°C et 190°C ;
- refroidir l'ensemble à une température inférieure à 100°C ;
- incorporer ensuite, au cours d'une seconde étape (dite "productive"), le système de réticulation ;
- malaxer le tout jusqu'à une température maximale inférieure à 110°C,
et il est caractérisé en ce que ledit système plastifiant comporte:
- entre 5 et 35 pce d'une huile MES ou TDAE ;
- entre 5 et 35 pce d'une résine de copolymère coupe C₅/ vinylaromatique (de préférence coupe C₅/styrène ou coupe C₅/coupe C₉) comportant 0 à moins de 10% en poids de (di)cyclopentadiène.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (élastomère diénique, charge renforçante et agent de couplage si nécessaire, système de plastification), puis dans un deuxième temps, par exemple après une à deux minutes de malaxage, les autres additifs, éventuels agents de recouvrement ou de mise en oeuvre complémentaires, à l'exception du système de réticulation. Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation est préférentiellement un système de vulcanisation à base de soufre et d'un accélérateur. On peut utiliser tout composé susceptible d'agir comme accélérateur de vulcanisation des élastomères diéniques en présence de soufre, en particulier ceux choisis dans le groupe constitué par disulfure de 2-mercaptobenzothiazyle (en abrégé "MBTS"), N-cyclohexyl-2-benzothiazyle sulfénamide (en abrégé "CBS"), N,N-dicylohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés. De préférence, on utilise un accélérateur primaire du type sulfénamide.

A ce système de vulcanisation viennent s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en particulier diphénylguanidine), etc. Dans le cas d'une utilisation de la composition de l'invention en bande de roulement de pneumatique, le taux de soufre est par exemple compris entre 0,5 et 3,0 pce, celui de l'accélérateur primaire entre 0,5 et 5,0 pce.

La composition finale ainsi obtenue peut ensuite être calandrée, par exemple sous la forme d'une feuille, d'une plaque ou encore extrudée, par exemple pour former un profilé de caoutchouc utilisé pour la fabrication d'un produit semi-fini pour pneumatique, tel que bandes de roulement, nappes ou autres bandes, sous-couches, divers blocs de caoutchouc, renforcés ou non de renforts textiles ou métalliques, destinés à former une partie de la structure du pneumatique, tout particulièrement sa bande de roulement.

La vulcanisation (ou cuisson) peut ensuite être conduite de manière connue à une température généralement comprise entre 130°C et 200°C, de préférence sous pression, pendant un temps suffisant qui peut varier par exemple entre 5 et 90 min en fonction notamment de la température de cuisson, du système de vulcanisation adopté et de la cinétique de vulcanisation de la composition considérée.

L'invention concerne les compositions de caoutchouc précédemment décrites tant à l'état dit "cru" (i.e. avant cuisson) qu'à l'état dit "cuit" ou vulcanisé (i.e. après vulcanisation).

### III. - EXEMPLES DE REALISATION

### III-1. Essai 1 : tests de résistance aux coupures et à l'écaillement

Une composition selon l'invention (notée ci-après C-3) a été comparée à deux compositions' témoins (notées C-1 et C-2), les trois compositions testées étant identiques aux différences près qui suivent :
- composition C-1 : témoin selon art antérieur avec huile aromatique (37 pce) ;
- composition C-2 : témoin avec huile MES seule (31,5 pce) ;
composition C-3 : composition avec système plastifiant selon l'invention (combinaison de 11,5 pce d'huile MES et de 20 pce de résine de copolymère coupe C₅/ styrène).

Ces trois compositions, à l'exception de leur système plastifiant, possèdent une formulation usuelle pour une composition de caoutchouc pour bande de roulement de pneumatique, à savoir essentiellement un mélange d'élastomères diéniques (SSBR 70/BR 30), de la silice (80 pce), du noir de carbone (5 pce) et un système de vulcanisation. Les compositions C-1 et C-2 ont été formulées à iso-volume d'huile plastifiante. Dans la composition C-3, 2/3 environ (soit 20 pce) d'huile MES ont été remplacés par une résine coupe C₅/styrène (20 pce de "Super Nevtac 85"), comparativement à la composition témoin C-2.

Les trois compositions ont été testées comme bandes de roulement de pneumatiques tourisme à carcasse radiale, de dimension 195/65 R15 (indice de vitesse H), conventionnellement fabriqués et en tous points identiques hormis la composition de caoutchouc constitutive de la bande de roulement. Ces pneumatiques sont notés respectivement P-1, P-2 et P-3, ils ont été montés sur un véhicule tourisme (véhicule Citroën modèle "C5" - pression avant et arrière : 2,2 bars - pneus testés montés à l'avant du véhicule - température ambiante 25°C) pour être soumis au test d'endurance du paragraphe I-4 permettant d'apprécier la résistance aux coupures et à l'écaillement des compositions de caoutchouc.

Ce test de résistance à l'écaillement démontre tout l'intérêt de la composition selon l'invention par rapport aux deux compositions témoins.

Les résultats sont rapportés dans le tableau 1 ci-dessous, en unités relatives, la base 100 ayant étant retenue pour le pneu témoin P-1 dont la bande de roulement comporte l'huile aromatique conventionnelle (une valeur supérieure à 100 indique une performance améliorée par rapport au témoin de base 100):

**Tableau 1**

| Pneumatiques N°: | P-1 | P-2 | P-3 |
|---|---|---|---|
| Résistance à l'écaillement | 100 | 85 | 113 |

On note tout d'abord que le remplacement de l'huile aromatique par l'huile MES (pneus P-2 comparés aux pneus P-1) se traduit par une chute inattendue de 15% de la résistance à l'écaillement, ce qui est tout à fait notable et peut être considéré comme rédhibitoire pour certains usages des pneumatiques.

Par contre, le remplacement d'une partie de l'huile MES par la résine polymérique coupe C₅/ styrène se traduit, de manière surprenante, par une remontée spectaculaire de performance (+ 33% pour les pneus P-3 comparativement aux pneus P-2), la résistance observée sur les pneus P-3 de l'invention étant même supérieure de 13% à celle des pneumatiques P-1 constituant la référence de départ.

### III-2. Essai 2 : autres tests de caoutchouterie

Dans les essais qui suivent, on a comparé dans différents tests de caoutchouterie les trois compositions précédentes (C-1 à C-3) à trois autres compositions (C-4 à C-6).

Ces compositions C-4 à C-6 incorporent des résines de copolymère de coupe C₅/styrène comportant en outre, à titre de troisième monomère, une fraction pondérale variable de DCPD (dicyclopentadiène).

Plus précisément, les compositions C-4, C-5 et C-6 sont identiques à la composition C-3 précédente à la nature près de la résine utilisée (% en poids) :
- composition C-4 (résine A) : copolymère de coupe C₅/styrène/DCPD '(5%) ;
- composition C-5 (résine B) : copolymère de coupe C₅/styrène/DCPD (15,5%) ;
- composition C-6 (résine C) : copolymère de coupe C₅/styrène/DCPD (33%).

Les compositions C-S et C-6 ne sont pas conformes à l'invention.

Pour comparaison, le copolymère C₅/styrène (résine commerciale) de la résine de la composition C-3 précédente est considéré comme quasiment dépourvu (i.e., comportant 0 à moins de 5%) de (D)CPD.

Pour les besoins de cet essai, les résines des compositions C-4 à C-6 (respectivement notées résines A, B et C) ont été synthétisées de manière connue, selon le procédé qui suit : un réacteur est chargé avec 1206 ml de toluène et une masse m₁ (respectivement 8,8 mg, 28 mg et 61 mg pour les résines A, B et C) de DCPD. A la température de 25°C, 4,6 g de trichlorure d'aluminium (Aldrich, pureté = 99%) sont ensuite ajoutés. Immédiatement après, un mélange constitué d'environ 61. mg de styrène et d'une masse m₂ (respectivement 105 mg, 88 mg et 56 mg pour les résines A, B et C) d'une coupe C₅ (à majorité isoprène et dépourvue de (D)CPD), est ajouté. à la suspension, goutte à goutte, pendant 5 min. La température du milieu réactionnel augmente (respectivement jusqu'à 58°C, 59°C et 50°C) et elle est ensuite maintenue constante à 40°C. Après 120 min de polymérisation, la réaction est stoppée avec 250 ml d'eau permutée. La phase organique est récupérée. A la résine encore en solution est ajouté 1,6 g de 2.2'-méthylène-bis(4-méthyl-6-tertiobutylphénol) à titre d'antioxydant. La majorité du toluène est éliminé à l'évaporateur rotatif à 70°C sous pression réduite. Le produit final est obtenu après séchage en étuve à 200°C sous pression réduite.

On obtient ainsi, sous forme d'un matériau de couleur brune et avec une conversion des monomères quasiment complète (94 à 100%, d'après chromatographie en phase gazeuse), des résines d'un copolymère comportant essentiellement des motifs coupe C₅-styrène-DCPD selon les fractions massiques qui suivent :
- résine A : 60% de coupe C₅ / 35% de styrène / 5% de DCPD ;
- résine B : 50,5% de coupe C₅ / 34% de styrène / 15,5% de DCPD ;
- résine C : 32% de coupe C₅ / 35% de styrène / 33% de DCPD,
   et dont les caractéristiques de Tg, Mn, Ip sont respectivement les suivantes :
- résine A : Tg = 20°C ; Mn = 780 ; Ip = 3,1 ;
- résine B : Tg = 40°C ; Mn = 960 ; Ip = 4,3 ;
- résine C : Tg = 31 °C ; Mn = 835 ; Ip = 4,0.

Les tableaux 2 et 3 donnent la formulation des différentes compositions testées (tableau 2 - taux des différents produits exprimés en pce) ainsi que leurs propriétés usuelles après cuisson (tableau 3). Les compositions C-4 à C-6 ont été formulées comme la composition C-3, à savoir que 20 pce d'huile MES ont été remplacés par 20 pce de la résine de copolymère de coupe C₅/styrène/DCPD.

A la lecture du tableau 3, on note que les propriétés de toutes les compositions selon l'invention (C-3 à C-6) sont sensiblement identiques en termes de dureté Shore comme de modules en traction, sous faible (10%) comme sous fort (100% et 300%) allongement.

De manière inattendue, la différence entre ces quatre compositions réside dans les valeurs de ΔG* qui sont d'autant plus basses que le taux de DCPD est faible, et dans les valeurs de tan(δ)ₘₐₓ (en température) qui sont quant à elle d'autant plus élevées que ce même taux de DCPD est faible. On rappelle que de manière bien connue de l'homme du métier, la valeur de ΔG* est représentative de l'hystérèse et de la résistance au roulement (plus ΔG* est faible, plus basse est l'hystérèse et donc la résistance au roulement) tandis que la valeur de tan(δ)ₘₐₓ "en température" ici mesurée (à contrainte donnée, selon un balayage en température) est connue comme représentative du potentiel d'adhérence sur sol mouillé (plus tan(δ)ₘₐₓ est élevée, meilleure est l'adhérence).

On note au passage que le remplacement de l'huile aromatique par l'huile MES (composition C-2 comparée à la composition C-1) se traduisait déjà par une augmentation notable de ΔG* et une réduction sensible de tan(δ)ₘₐₓ (en température), en d'autres termes d'une certaine dégradation du compromis adhérence/résistance au roulement évoqué ci-dessus.

La conclusion de cet essai est que l'utilisation des résines selon l'invention permet une résistance au roulement et une adhérence sur sol mouillé toutes deux améliorées.

L'invention permet ainsi d'améliorer à la fois la résistance au roulement et l'adhérence sur sol mouillé des bandes de roulement conformes à l'invention, tout en augmentant leur résistance à l'écaillement.

**Tableau 2**

| Composition N° : | C-1 | C-2 | C-3 | C-4 | C-5 | C-6 |
|---|---|---|---|---|---|---|
| S-SBR (1) | 70 | 70 | 70 | 70 | 70 | 70 |
| BR (2) | 30 | 30 | 30 | 30 | 30 | 30 |
| silice (3) | 80 | 80 | 80 | 80 | 80 | 80 |
| agent de couplage (4) | 6.4 | 6.4 | 6.4 | 6.4 | 6.4 | 6.4 |
| noir de carbone (5) | 5 | 5 | 5 | 5 | 5 | 5 |
| huile aromatique (6) | 37 | - | - | - | - | - |
| huile MES (7) | - | 31.5 | 11.5 | 11.5 | 11.5 | 11.5 |
| résine (8) | - | - | 20 | - | - | - |
| résine (9) | - | - | - | 20 | - | - |
| résine (10) | - | - | - | - | 20 | - |
| résine (11) | - | - | - | - | - | 20 |
| ZnO (12) | 1.5 | 1.5 | 1.5 | 1.5 | 1.5 | 1.5 |
| acide stéarique (13) | 2 | 2 | 2 | 2 | 2 | 2 |
| antioxydant (14) | 1.9 | 1.9 | 1.9 | 1.9 | 1.9 | 1.9 |
| DPG(15) | 1.5 | 1.5 | 1.5 | 1.5 | 1.5 | 1.5 |
| soufre | 1 | 1 | 1 | 1 | 1 | 1 |
| accélérateur (16) | 2 | 2 | 2 | 2 | 2 | 2 |

| | | | | | | |
|---|---|---|---|---|---|---|
| (1) SBR solution étendu à l'huile (taux exprimé en SBR sec) ; 25% de styrène, 58% de motifs polybutadiène 1-2 et 23% de motifs polybutadiène 1-4 trans (Tg = -24°C) ; (2) BR avec 4,3% de 1-2 ; 2,7% de trans ; 93% de cis 1-4 (Tg = -106°C) ; (3) silice "Zeosil 1165MP" de la société Rhodia, type "HD" - (BET et CTAB : environ 160 m²/g) ; (4) agent de couplage TESPT ("Si69" de la société Degussa) ; (5) noir de carbone N234 (grade ASTM) ; (6) huile aromatique totale (y compris huile d'extension du SBR) ; (7) huile MES totale (y compris huile d'extension du SBR- Catenex SNR de Shell) ; (8) résine coupe C₅/styrène ("Super Nevtac 85" de Neville Chemical Company) ; (9) résine A (5% de DCPD) ; (10) résine B (15,5% de DCPD) ; (11) résine C (33% de DCPD) ; (12) oxyde de zinc (grade industriel - société Umicore) ; (13) stéarine ("Pristerene 4931" - société Uniqema) ; (14) N-1,3-diméthylbutyl-N-phénylparaphénylènediamine (Santoflex 6-PPD de la société Flexsys) ; (15) diphénylguanidine (Perkacit DPG de la société Flexsys) ; (16) N-cyclohexyl-2-benzothiazyl-sulfénamide (Santocure CBS de la société Flexsys). | | | | | | |

**Tableau 3**

| Composition N°: | C-1 | C-2 | C-3 | C-4 | C-5 | C-6 |
|---|---|---|---|---|---|---|
| Dureté Shore | 64 | 65 | 65 | 67 | 67 | 68 |
| M10 (MPa) | 4.8 | 4.7 | 4.8 | 5.2 | 5.3 | 5.6 |
| M100 (MPa) | 1.6 | 1.8 | 1.7 | 1.8 | 1.8 | 1.8 |
| M300 (MPa) | 1.9 | 2.2 | 2.1 | 2.1 | 2.1 | 2.1 |
| tan(δ)ₘₐₓ (en température) | 0.70 | 0.66 | 0.72 | 0.68 | 0.66 | 0.64 |
| ΔG*(MPa) | 4.08 | 4.47 | 3.84 | 3.98 | 4.63 | 4.80 |

## Revendications

1. Système plastifiant utilisable pour la plastification d'une composition de caoutchouc diénique, **caractérisé en ce qu'**il comporte entre 5 et 35 pce d'une huile MES ou TDAE et entre 5 et 35 pce d'une résine de copolymère coupe C₅/ vinylaromatique comportant 0 à moins de 10% en poids de (di)cyclopentadiène (pce signifiant parties en poids pour cent parties d'élastomère).

2. Système plastifiant selon la revendication 1, la température de transition vitreuse (selon ASTM D3418) de la résine étant égale ou supérieure à 20°C, de préférence supérieure à 25°C.

3. Système plastifiant selon la revendication 1 ou 2, la masse moléculaire moyenne en nombre de la résine étant comprise entre 400 et 2000 g/mol.

4. Système plastifiant selon l'une quelconque des revendications 1 à 3, le copolymère de la résine étant un copolymère de coupe C₅ et de styrène.

5. Système plastifiant selon l'une quelconque des revendications 1 à 3, le copolymère de la résine étant un copolymère de coupe C₅ et de coupe C₈-C₁₀.

6. Système plastifiant selon l'une quelconque des revendications 1 à 3, le copolymère de la résine étant un copolymère de coupe C₅ et de coupe C₉.

7. Système plastifiant selon l'une quelconque des revendications 1 à 6, comportant en outre entre 5 et 35 pce d'un triester d'acide gras insaturé (C₁₂-C₂₂) de glycérol.

8. Système plastifiant selon la revendication 7, le triester étant un trioléate de glycérol.

9. Système plastifiant selon l'une quelconque des revendications 1 à 8, la résine de copolymère coupe C₅/ vinylaromatique comportant 0 à moins de 5% en poids de (di)cyclopentadiène.

10. Composition de caoutchouc à base d'au moins un élastomère diénique, une charge renforçante, un système plastifiant et un système de réticulation, **caractérisée en ce que** ledit système plastifiant comporte (pce signifiant parties en poids pour cent d'élastomère) :
- entre 5 et 35 pce d'une huile MES ou TDAE ;
- entre 5 et 35 pce d'une résine de copolymère coupe C₅/vinylaromatique comportant 0 à moins de 10% en poids de (di)cyclopentadiène.

11. Composition selon la revendication 10, le taux de résine étant compris entre 5 et 25 pce.

12. Composition selon les revendications 10 ou 11, la température de transition vitreuse (selon ASTM D3418) de la résine étant égale ou supérieure à 20°C, de préférence supérieure à 25°C.

13. Composition selon l'une quelconque des revendications 10 à 12, la masse moléculaire moyenne en nombre de la résine étant comprise entre 400 et 2000 g/mol.

14. Composition selon l'une quelconque des revendications 10 à 13, le copolymère étant un copolymère de coupe C₅ et de styrène.

15. Composition selon l'une quelconque des revendications 10 à 13, le copolymère étant un copolymère de coupe C₅ et de coupe C₈-C₁₀.

16. Composition selon l'une quelconque des revendications 10 à 13, le copolymère étant un copolymère de coupe C₅ et de coupe C₉.

17. Composition selon l'une quelconque des revendications 10 à 16, le taux d'huile MES ou TDAE étant compris entre 10 et 30 pce.

18. Composition selon l'une quelconque des revendications 10 à 17, le taux de système plastifiant total étant compris entre 15 et 45 pce.

19. Composition selon l'une quelconque des revendications 10 à 18, l'élastomère diénique étant choisi dans le groupe constitué par les polybutadiènes, le caoutchouc naturel, les polyisoprènes de synthèse, les copolymères de butadiène, les copolymères d'isoprène et les mélanges de ces élastomères.

20. Composition selon l'une quelconque des revendications 10 à 19, le système plastifiant comportant en outre entre 5 et 35 pce d'un triester d'acide gras insaturé (C₁₂-C₂₂) de glycérol.

21. Composition selon la revendication 20, le triester étant un trioléate de glycérol.

22. Composition selon l'une quelconque des revendications 10 à 21, la charge renforçante étant présente à un taux compris entre 20 et 200 pce, de préférence entre 30 et 150 pce.

23. Composition selon l'une quelconque des revendications 10 à 22, la charge renforçante étant de la silice.

24. Composition selon l'une quelconque des revendications 10 à 23, la résine de copolymère coupe C₅/ vinylaromatique comportant 0 à moins de 5% en poids de (di)cyclopentadiène.

25. Procédé pour préparer une composition de caoutchouc à base d'un élastomère diénique, d'une charge renforçante, d'un système plastifiant et d'un système de réticulation, ledit procédé comportant les étapes suivantes (pce signifiant parties en poids pour cent d'élastomère):
• incorporer à un élastomère diénique, au cours d'une première étape dite "non-productive", au moins une charge renforçante et un système plastifiant, en malaxant thermomécaniquement le tout, en une ou plusieurs fois, jusqu'à atteindre une température maximale comprise entre 110°C et 190°C ;
• refroidir l'ensemble à une température inférieure à 100°C ;
• incorporer ensuite, au cours d'une seconde étape dite "productive", le système de réticulation ;
• malaxer le tout jusqu'à une température maximale inférieure à 110°C,
et étant **caractérisé en ce que** ledit système plastifiant comporte :
- entre 5 et 35 pce d'une huile MES ou TDAE ;
- entre 5 et 35 pce d'une résine de copolymère coupe C₅/ vinylaromatique comportant 0 à moins de 10%, de préférence 0 à moins de 5% en poids de (di)cyclopentadiène.

26. Procédé selon la revendication 25, le taux de résine étant comprise entre 5 et 25 pce.

27. Procédé selon la revendication 25 ou 26, la température de transition vitreuse (selon ASTM D3418) de la résine étant égale ou supérieure à 20°C, de préférence supérieure à 25°C.

28. Procédé selon l'une quelconque des revendications 25 à 27, la masse moléculaire moyenne en nombre (Mn) de la résine étant comprise entre 400 et 2000 g/mol.

29. Procédé selon l'une quelconque des revendications 25 à 28, le copolymère étant un copolymère de coupe C₅ et de styrène.

30. Procédé selon l'une quelconque des revendications 25 à 28, le copolymère étant un copolymère de coupe C₅ et de coupe C₈-C₁₀.

31. Procédé selon l'une quelconque des revendications 25 à 28, le copolymère étant un copolymère de coupe C₅ et de coupe C₉.

32. Procédé selon l'une quelconque des revendications 25 à 31, le taux d'huile MES ou TDAE étant compris entre 10 et 30 pce.

33. Procédé selon l'une quelconque des revendications 25 à 32, le taux de système plastifiant total étant compris entre 15 et 45 pce.

34. Procédé selon l'une quelconque des revendications 25 à 33, le système plastifiant comportant en outre entre 5 et 35 pce d'un triester d'acide gras insaturé (C₁₂-C₂₂) de glycérol.

35. Procédé selon la revendication 34, le triester étant un trioléate de glycérol.

36. Procédé selon l'une quelconque des revendications 25 à 35, la charge renforçante étant présente à un taux compris entre 20 et 200 pce, de préférence entre 30 et 150 pce.

37. Procédé selon l'une quelconque des revendications 25 à 36, la charge renforçante étant de la silice.

38. Pneumatique comportant un système plastifiant selon l'une quelconque des revendications 1 à 9 ou une composition selon l'une quelconque des revendications 10 à 24.

39. Pneumatique selon la revendication 38, ledit système planifiant ou ladite composition étant présente dans la bande de roulement du pneumatique.

40. Utilisation, pour la plastification d'une composition de caoutchouc diénique, d'un système plastifiant comportant en combinaison une huile MES ou TDAE et une résine de copolymère coupe C₅/ vinylaromatique comportant 0 à moins de 10% en poids de (di)cyclopentadiène.

41. Utilisation selon la revendication 40, la température de transition vitreuse (selon ASTM D3418) de la résine étant égale ou supérieure à 20°C, de préférence supérieure à 25°C.

42. Utilisation selon la revendication 40 ou 41, la masse moléculaire moyenne en nombre de la résine étant comprise entre 400 et 2000 g/mol.

43. Utilisation selon l'une quelconque des revendications 40 à 42, le copolymère de la résine étant un copolymère de coupe C₅ et de styrène.

44. Utilisation selon l'une quelconque des revendications 40 à 42, le copolymère de la résine étant un copolymère de coupe C₅ et de coupe C₈-C₁₀.

45. Utilisation selon l'une quelconque des revendications 40 à 42, le copolymère de la résine étant un copolymère de coupe C₅ et de coupe C₉.

46. Utilisation selon l'une quelconque des revendications 40 à 45, la résine de copolymère coupe C₅/ vinylaromatique comportant 0 à moins de 5% en poids de (di)cyclopentadiène.

## Claims

1. Plasticizer system which can be used for the plasticizing of a diene rubber composition, **characterized in that** it comprises between 5 and 35 phr of an MES or TDAE oil and between 5 and 35 phr of a resin formed of C₅ fraction/vinylaromatic copolymer comprising from 0 to less than 10% by weight of (di)cyclopentadiene (phr meaning parts by weight per hundred parts of elastomer).

2. Plasticizer system according to Claim 1, the glass transition temperature (according to ASTM D3418) of the resin being equal to or greater than 20°C, preferably greater than 25°C.

3. Plasticizer system according to Claim 1 or 2, the number-average molecular weight of the resin being between 400 and 2000 g/mol.

4. The plasticizer system according to any one of Claims 1 to 3, the copolymer of the resin being a C₅ fraction and styrene copolymer.

5. Plasticizer system according to any one of Claims 1 to 3, the copolymer of the resin being a C₅ fraction and C₈-C₁₀ fraction copolymer.

6. Plasticizer system according to any one of Claims 1 to 3, the copolymer of the resin being a C₅ fraction and C₉ fraction copolymer.

7. Plasticizer system according to any one of claims 1 to 6, additionally comprising between 5 and 35 phr of a glycerol unsaturated (C₁₂-C₂₂) fatty acid triester.

8. Plasticizer system according to Claim 7, the triester being a glycerol trioleate.

9. Plasticizer system according to any one of Claims 1 to 8, the resin formed of C₅ fraction/vinylaromatic copolymer comprising from 0 to less than 5% by weight of (di)cyclopentadiene.

10. Rubber composition based on at least one diene elastomer, one reinforcing filler, one plasticizer system and one crosslinking system, **characterized in that** said plasticizer system comprises (phr meaning parts by weight per hundred parts of elastomer):
- between 5 and 35 phr of an MES or TDAE oil;
- between 5 and 35 phr of a resin formed of C₅ fraction/vinylaromatic copolymer comprising from 0 to less than 10% by weight of (di)cyclopentadiene.

11. Composition according to Claim 10, the content of resin being between 5 and 25 phr.

12. Composition according to Claim 10 or Claim 11, the glass transition temperature of the resin being equal to or greater than 20°C, preferably greater than 25°C.

13. Composition according to any one of Claims 10 to 12, the number-average molecular weight of the resin being between 400 and 2000 g/mol.

14. Composition according to any one of Claims 10 to 13, the copolymer being a C₅ fraction and styrene copolymer.

15. Composition according to any one of Claims 10 to 13, the copolymer being a C₅ fraction and C₈-C₁₀ fraction copolymer.

16. Composition according to any one of Claims 10 to 13, the copolymer being a C₅ fraction and C₉ fraction copolymer.

17. Composition according to any one of Claims 10 to 16, the level of MES or TDAE oil being between 10 and 30 phr.

18. Composition according to any one of Claims 10 to 17, the total plasticizer system content being between 15 and 45 phr.

19. Composition according to any one of Claims 10 to 18, the diene elastomer being chosen from the group consisting of polybutadienes, natural rubber, synthetic polyisoprenes, butadiene copolymers, isoprene copolymers and the blends of these elastomers.

20. Composition according to any one of Claims 10 to 19, the plasticizer system additionally comprising between 5 and 35 phr of a glycerol unsaturated (C₁₂-C₂₂) fatty acid triester.

21. Composition according to Claim 20, the triester being a glycerol trioleate.

22. Composition according to any one of Claims 10 to 21, the reinforcing filler being present at a content of between 20 and 200 phr, preferably between 30 and 150 phr.

23. Composition according to any one of Claims 10 to 22, the reinforcing filler being silica.

24. Composition according to any one of Claims 10 to 23, the resin formed of C₅ fraction/vinylaromatic copolymer comprising from 0 to less than 5% by weight of (di)cyclopentadiene.

25. Process for preparing a rubber composition based on a diene elastomer, on a reinforcing filler, on a plasticizer system and on a crosslinking system, said process comprising the following stages (phr meaning parts by weight per hundred parts of elastomer):
• incorporating in a diene elastomer, during a first "nonproductive" stage, at least one reinforcing filler and one plasticizer system, everything being kneaded thermomechanically, in one or more goes, until a maximum temperature of between 110°C and 190°C is reached;
• cooling the combined mixture to a temperature of less than 100°C;
• subsequently incorporating, during a second "productive" stage, the crosslinking system;
• kneading everything up to a maximum temperature of less than 110°C,
and being **characterized in that** said plasticizer system comprises:
- between 5 and 35 phr of an MES or TDAE oil;
- between 5 and 35 phr of a resin formed of C₅ fraction/vinylaromatic copolymer comprising from 0 to less than 10%, preferably from 0 to less than 5%, by weight of (di)cyclopentadiene.

26. Process according to Claim 25, the content of resin being between 5 and 25 phr.

27. Process according to Claim 25 or 26, the glass transition temperature (according to ASTM D3418) of the resin being equal to or greater than 20°C, preferably greater than 25°C.

28. Process according to any one of Claims 25 to 27, the number-average molecular weight (Mn) of the resin being between 400 and 2000 g/mol.

29. Process according to any one of Claims 25 to 28, the copolymer being a C₅ fraction and styrene copolymer.

30. Process according to any one of Claims 25 to 28, the copolymer being a C₅ fraction and C₈-C₁₀ fraction copolymer.

31. Process according to any one of Claims 25 to 28, the copolymer being a C₅ fraction and C₉ fraction copolymer.

32. Process according to any one of Claims 25 to 31, the content of MES or TDAE oil being between 10 and 30 phr.

33. Process according to any one of Claims 25 to 32, the total plasticizer system content being between 15 and 45 phr.

34. Process according to any one of Claims 25 to 33, the plasticizer system additionally comprising between 5 and 35 phr of a glycerol unsaturated (C₁₂-C₂₂) fatty acid triester.

35. Process according to Claim 34, the triester being a glycerol trioleate.

36. Process according to any one of Claims 25 to 35, the reinforcing filler being present at a content of between 20 and 200 phr, preferably between 30 and 150 phr.

37. Process according to any of Claims 25 to 36, the reinforcing filler being silica.

38. Tyre comprising a plasticizer system according to any one of Claims 1 to 9 or a composition according to any one of Claims 10 to 24.

39. Tyre according to Claim 38, said plasticizer system or said composition being present in the tread of the tyre.

40. Use, for the plasticizing of a diene rubber composition, of a plasticizer system comprising, in combination, an MES or TDAE oil and a resin formed of C₅ fraction/vinylaromatic copolymer comprising from 0 to less than 10% by weight of (di)cyclopentadiene.

41. Use according to Claim 40, the glass transition temperature (according to ASTM D3418) of the resin being equal to or greater than 20°C, preferably greater than 25°C.

42. Use according to Claim 40 or 41, the number-average molecular weight of the resin being between 400 and 2000 g/mol.

43. Use according to any one of Claims 40 to 42, the copolymer of the resin being a C₅ fraction and styrene copolymer.

44. Use according to any one of Claims 40 to 42, the copolymer of the resin being a C₅ fraction and C₈-C₁₀ fraction copolymer.

45. Use according to any one of Claims 40 to 42, the copolymer of the resin being a C₅ fraction and C₉ fraction copolymer.

46. Use according to any one of Claims 40 to 45, the resin formed of C₅ fraction/vinylaromatic copolymer comprising from 0 to less than 5% by weight of (di)cyclopentadiene.

## Patentansprüche

1. Weichmachersystem, das zum Weichmachen einer Dienkautschukzusammensetzung verwendet werden kann, **dadurch gekennzeichnet, dass** es zwischen 5 und 35 phe eines MES- oder TDAE-Öls und zwischen 5 und 35 phe eines C₅-Schnitt/Vinylaromat-Copolymerharzes, das 0 bis weniger als 10 Gew.-% (Di)cyclopentadien umfasst (wobei phe Gewichtsteile pro hundert Teile Elastomer bedeutet) umfasst.

2. Weichmachersystem nach Anspruch 1, wobei die Glasübergangstemperatur (gemäß ASTM D3418) des Harzes größer gleich 20°C und vorzugsweise größer als 25°C ist.

3. Weichmachersystem nach Anspruch 1 oder 2, wobei das zahlenmittlere Molekulargewicht des Harzes zwischen 400 und 2000 g/mol liegt.

4. Weichmachersystem nach einem der Ansprüche 1 bis 3, wobei es sich bei dem Copolymer des Harzes um ein Copolymer von C₅-Schnitt und Styrol handelt.

5. Weichmachersystem nach einem der Ansprüche 1 bis 3, wobei es sich bei dem Copolymer des Harzes um ein Copolymer von C₅-Schnitt und C₈-C₁₀-Schnitt handelt.

6. Weichmachersystem nach einem der Ansprüche 1 bis 3, wobei es sich bei dem Copolymer des Harzes um ein Copolymer von C₅-Schnitt und C₉-Schnitt handelt.

7. Weichmachersystem nach einem der Ansprüche 1 bis 6, das außerdem zwischen 5 und 35 phe eines Triesters von Glycerin und ungesättigten (C₁₂-C₂₂) - Fettsäuren umfasst.

8. Weichmachersystem nach Anspruch 7, wobei es sich bei dem Triester um ein Glycerintrioleat handelt.

9. Weichmachersystem nach einem der Ansprüche 1 bis 8, wobei das C₅-Schnitt/Vinylaromat-Copolymerharz 0 bis weniger als 5 Gew.-% (Di)cyclopentadien umfasst.

10. Kautschukzusammensetzung auf Basis mindestens eines Dienelastomers, eines verstärkenden Füllstoffs, eines Weichmachersystems und eines Vernetzungssystems, **dadurch gekennzeichnet, dass** das Weichmachersystem Folgendes umfasst (wobei phe Gewichtsteile pro hundert Teile Elastomer bedeutet):
- zwischen 5 und 35 phe eines MES- oder TDAE-Öls;
- zwischen 5 und 35 phe eines C₅-Schnitt/Vinylaromat-Copolymerharzes, das 0 bis weniger als 10 Gew.-% (Di)cyclopentadien umfasst.

11. Zusammensetzung nach Anspruch 10, wobei der Harzgehalt zwischen 5 und 25 phe liegt.

12. Zusammensetzung nach den Ansprüchen 10 oder 11, wobei die Glasübergangstemperatur (gemäß ASTM D3418) des Harzes größer gleich 20°C und vorzugsweise größer als 25°C ist.

13. Zusammensetzung nach einem der Ansprüche 10 bis 12, wobei das zahlenmittlere Molekulargewicht des Harzes zwischen 400 und 2000 g/mol liegt.

14. Zusammensetzung nach einem der Ansprüche 10 bis 13, wobei es sich bei dem Copolymer um ein Copolymer von C₅-Schnitt und Styrol handelt.

15. Zusammensetzung nach einem der Ansprüche 10 bis 13, wobei es sich bei dem Copolymer um ein Copolymer von C₅-Schnitt und C₈-C₁₀-Schnitt handelt.

16. Zusammensetzung nach einem der Ansprüche 10 bis 13, wobei es sich bei dem Copolymer um ein Copolymer von C₅-Schnitt und C₉-Schnitt handelt.

17. Zusammensetzung nach einem der Ansprüche 10 bis 16, wobei der Gehalt an MES- oder TDAE-Öl zwischen 10 und 30 phe liegt.

18. Zusammensetzung nach einem der Ansprüche 10 bis 17, wobei der Gesamtgehalt an Weichmachersystem zwischen 15 und 45 phe liegt.

19. Zusammensetzung nach einem der Ansprüche 10 bis 18, wobei das Dienelastomer aus der Gruppe bestehend aus Polybutadienen, Naturkautschuk, synthetischen Polyisoprenen, Butadien-Copolymeren, Isopren-Copolymeren und Mischungen dieser Elastomere ausgewählt ist.

20. Zusammensetzung nach einem der Ansprüche 10 bis 19, wobei das Weichmachersystem außerdem zwischen 5 und 35 phe eines Triesters von Glycerin und ungesättigten (C₁₂-C₂₂) -Fettsäuren umfasst.

21. Zusammensetzung nach Anspruch 20, wobei es sich bei dem Triester um ein Glycerintrioleat handelt.

22. Zusammensetzung nach einem der Ansprüche 10 bis 21, wobei der verstärkende Füllstoff in einem Gehalt zwischen 20 und 200 phe, vorzugsweise zwischen 30 und 150 phe, vorliegt.

23. Zusammensetzung nach einem der Ansprüche 10 bis 22, wobei es sich bei dem verstärkenden Füllstoff um Kieselsäure handelt.

24. Zusammensetzung nach einem der Ansprüche 10 bis 23, wobei das C₅-Schnitt/Vinylaromat-Copolymerharz 0 bis weniger als 5 Gew.-% (Di)cyclopentadien umfasst.

25. Verfahren zur Herstellung einer Kautschukzusammensetzung auf Basis eines Dienelastomers, eines verstärkenden Füllstoffs, eines Weichmachersystems und eines Vernetzungssystems, bei dem man (wobei phe Gewichtsteile pro hundert Teile Elastomer bedeutet):
• im Lauf eines ersten, als "nichtproduktiv" bezeichneten Schritts in ein Dienelastomer mindestens einen verstärkenden Füllstoff und ein Weichmachersystem einarbeitet, indem man das Ganze ein- oder mehrmals thermomechanisch knetet, bis eine Höchsttemperatur zwischen 110°C und 190°C erreicht ist;
• das Ganze auf eine Temperatur von weniger als 100°C abkühlt;
• dann im Lauf eines zweiten, als "produktiv" bezeichneten Schritts das Vernetzungssystem einarbeitet;
• das Ganze bis zu einer Höchsttemperatur von weniger als 110°C knetet;
**dadurch gekennzeichnet, dass** das Weichmachersystem Folgendes umfasst:
- zwischen 5 und 35 phe eines MES- oder TDAE-Öls;
- zwischen 5 und 35 phe eines C₅-Schnitt/Vinylaromat-Copolymerharzes, das 0 bis weniger als 10 Gew.-%, vorzugsweise 0 bis weniger als 5 Gew.-%, (Di)cyclopentadien umfasst.

26. Verfahren nach Anspruch 25, wobei der Harzgehalt zwischen 5 und 25 phr liegt.

27. Verfahren nach Anspruch 25 oder 26, wobei die Glasübergangstemperatur (gemäß ASTM D3418) des Harzes größer gleich 20°C und vorzugsweise größer als 25°C ist.

28. Verfahren nach einem der Ansprüche 25 bis 27, wobei das zahlenmittlere Molekulargewicht (Mn) des Harzes zwischen 400 und 2000 g/mol liegt.

29. Verfahren nach einem der Ansprüche 25 bis 28, wobei es sich bei dem Copolymer um ein Copolymer von C₅-Schnitt und Styrol handelt.

30. Verfahren nach einem der Ansprüche 25 bis 28, wobei es sich bei dem Copolymer um ein Copolymer von C₅-Schnitt und C₈-C₁₀-Schnitt handelt.

31. Verfahren nach einem der Ansprüche 25 bis 28, wobei es sich bei dem Copolymer um ein Copolymer von C₅-Schnitt und C₉-Schnitt handelt.

32. Verfahren nach einem der Ansprüche 25 bis 31, wobei der Gehalt an MES- oder TDAE-Öl zwischen 10 und 30 phe liegt.

33. Verfahren nach einem der Ansprüche 25 bis 32, wobei der Gesamtgehalt an Weichmachersystem zwischen 15 und 45 phe liegt.

34. Verfahren nach einem der Ansprüche 25 bis 33, wobei das Weichmachersystem außerdem zwischen 5 und 35 phe eines Triesters von Glycerin und ungesättigten (C₁₂-C₂₂) -Fettsäuren umfasst.

35. Verfahren nach Anspruch 34, wobei es sich bei dem Triester um ein Glycerintrioleat handelt.

36. Verfahren nach einem der Ansprüche 25 bis 35, wobei der verstärkende Füllstoff in einem Gehalt zwischen 20 und 200 phe, vorzugsweise zwischen 30 und 150 phe, vorliegt.

37. Verfahren nach einem der Ansprüche 25 bis 36, wobei es sich bei dem verstärkenden Füllstoff um Kieselsäure handelt.

38. Reifen, umfassend ein Weichmachersystem nach einem der Ansprüche 1 bis 9 oder eine Zusammensetzung nach einem der Ansprüche 10 bis 24.

39. Reifen nach Anspruch 38, wobei das Weichmachersystem bzw. die Zusammensetzung in der Lauffläche des Reifens vorliegt.

40. Verwendung eines Weichmachersystems, das in Kombination ein MES- oder TDAE-Öl und ein C₅-Schnitt/Vinylaromat-Copolymerharz, das 0 bis weniger als 10 Gew.-% (Di)cyclopentadien umfasst, umfasst, zum Weichmachen einer Dienkautschukzusammensetzung.

41. Verwendung nach Anspruch 40, wobei die Glasübergangstemperatur (gemäß ASTM D3418) des Harzes größer gleich 20°C und vorzugsweise größer als 25°C ist.

42. Verwendung nach Anspruch 40 oder 41, wobei das zahlenmittlere Molekulargewicht des Harzes zwischen 400 und 2000 g/mol liegt.

43. Verwendung nach einem der Ansprüche 40 bis 42, wobei es sich bei dem Copolymer des Harzes um ein Copolymer von C₅-Schnitt und Styrol handelt.

44. Verwendung nach einem der Ansprüche 40 bis 42, wobei es sich bei dem Copolymer des Harzes um ein Copolymer von C₅-Schnitt und C₈-C₁₀-Schnitt handelt.

45. Verwendung nach einem der Ansprüche 40 bis 42, wobei es sich bei dem Copolymer des Harzes um ein Copolymer von C₅-Schnitt und C₉-Schnitt handelt.

46. Verwendung nach einem der Ansprüche 40 bis 45, wobei das C₅-Schnitt/Vinylaromat-Copolymerharz 0 bis weniger als 5 Gew.-% (Di)cyclopentadien umfasst.
